# EUROPEAN PATENT SPECIFICATION

(11) **EP 2 381 729 B1**
(45) Date of publication and mention of the grant of the patent: **06.08.2014**
(21) Application number: 11174665.7
(22) Date of filing: 20.08.2007
(51) Int. Cl.: H04W 72/04

(54) **Dynamic resource allocation scheduling and signaling for a variable data rate service in LTE**
Dynamische Ressourcenzuweisungsplanung und -signalisierung für einen LTE-Dienst mit variabler Datenrate
Programmation de l'affectation dynamique de ressources et signalisation d'un service à taux de données variable dans LTE

(30) Priority: 21.08.2006 US 839110 P
(43) Date of publication of application: 26.10.2011
(62) Divisional of application: 10188095.3
(73) Proprietor: InterDigital Technology Corporation, Wilmington, DE 19809 (US)
(72) Inventor: Wang, Jin, Central Islip, NY New York 11722 (US); Mohammed, Sammour, Montreal, Québec H4R2L5 (CA); Chandra, Arty, Manhasset Hills, NY New York 111040 (US)
(74) Representative: Hjalmarsson, Magnus Axel

(56) References cited:
- WO-A1-2006/019267
- QUALCOMM EUROPE: "R1-060173 Considerations for control signalling support of Real Time Services", INTERNET CITATION, 19 January 2006 (2006-01-19), XP002474504, Retrieved from the Internet: URL:http://www.3gpp1.org/ftp/tsg_ran/WG1_R L1/TSGR1_AH/LTE_AH_January-06/Docs [retrieved on 2008-03-31]
- HOWON LEE ET AL: "Extended-rtPS Algorithm for VoIP Services in IEEE 802.16 systems", COMMUNICATIONS, 2006. ICC '06. IEEE INTERNATIONAL CONFERENCE ON, IEEE, PI, 1 June 2006 (2006-06-01), pages 2060-2065, XP031025367, ISBN: 978-1-4244-0354-7
- HOWON LEE ET AL: "IEEE C802.16e-04/522 Extended rtPS for VoIP services", INTERNET CITATION, 4 November 2004 (2004-11-04), XP002474502, Retrieved from the Internet: URL:http://wirelessman.org/tge/contrib/C80 216e-04_522.pdf [retrieved on 2008-03-31]

## Description

### FIELD OF INVENTION

The present invention is related to wireless communication systems. More particularly, the present invention is related to a method and apparatus for dynamic resource allocation, scheduling and signaling for variable data rate service in long term evolution (LTE) systems.

### BACKGROUND

Wireless communication systems are well known in the art. Communications standards are developed in order to provide global connectivity for wireless systems and to achieve performance goals in terms of, for example, throughput, latency and coverage. One current standard in widespread use, called Universal Mobile Telecommunications Systems (UMTS), was developed as part of Third Generation (3G) Radio Systems, and is maintained by the Third Generation Partnership Project (3GPP).

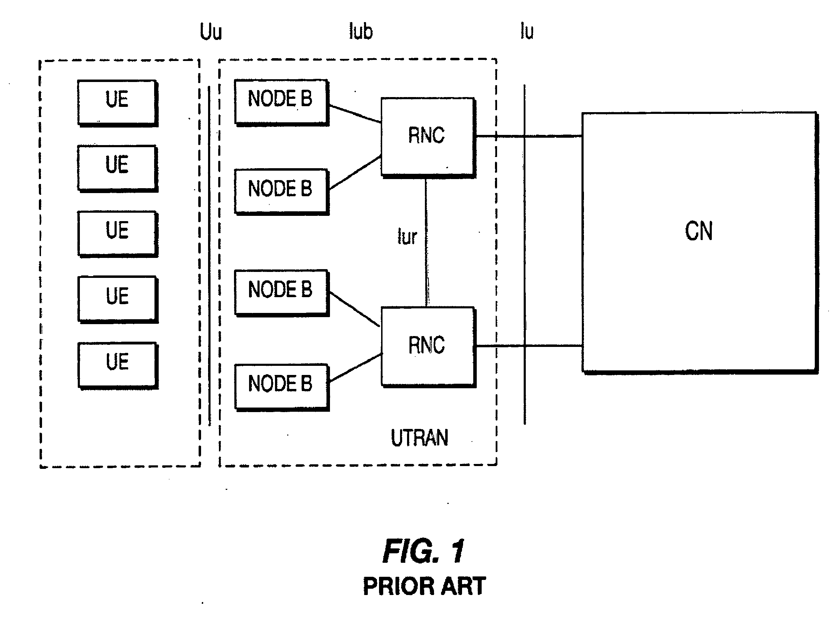

A typical UMTS system architecture in accordance with current 3GPP specifications is depicted in Figure 1. The UMTS network architecture includes a Core Network (CN) interconnected with a UMTS Terrestrial Radio Access Network (UTRAN) via an Iu interface. The UTRAN is configured to provide wireless telecommunication services to users through wireless transmit receive units (WTRUs), referred to as user equipments (UEs) in the 3GPP standard, via a Uu radio interface. For example, a commonly employed air interface defined in the UMTS standard is wideband code division multiple access (W-CDMA). The UTRAN has one or more radio network controllers (RNCs) and base stations, referred to as Node Bs by 3GPP, which collectively provide for the geographic coverage for wireless communications with UEs. One or more Node Bs is connected to each RNC via an Iub interface. RNCs within a UTRAN communicate via an Iur interface.

The Uu radio interface of a 3GPP system uses Transport Channels (TrCHs) for transfer of higher layer packet containing user data and signaling between UEs and Node Bs. In 3GPP communications, TrCH data is conveyed by one or more physical channels defined by mutually exclusive physical radio resources, or shared physical radio resources in the case of shared channels

To improve reliability of data transmission, automatic repeat request (ARQ) or hybrid ARQ (HARQ) is implemented. HARQ and ARQ employ a mechanism to send feedback to the original sender in the form of a positive acknowledgment (ACK) or a negative acknowledgement (NACK) that respectively indicate successful or unsuccessful receipt of a data packet to a transmitter so that the transmitter may retransmit a failed packet. HARQ also uses error correcting codes, such as turbo codes, for added reliability.

Evolved universal terrestrial radio access (E-UTRA) and UTRAN long term evolution (LTE) are part of a current effort lead by 3GPP towards achieving high data-rate, low-latency, packet-optimized system capacity and coverage in UMTS systems. In this regard, LTE is being designed with significant changes to existing 3GPP radio interface and radio network architecture, requiring evolved Node Bs (eNBs), which are base stations (Node Bs) configured for LTE. For example, it has been proposed for LTE to replace code division multiple access (CDMA) channel access used currently in UMTS, by orthogonal frequency division multiple access (OFDMA) and frequency division multiple access (FDMA) as air interface technologies for downlink and uplink transmissions, respectively. LTE is being designed to use HARQ with one HARQ process assigned to each data flow and include physical layer support for multiple-input multiple-output (MIMO).

LTE systems are also being designed to be entirely packet switched for both voice and data traffic. This leads to many challenges in the design of LTE systems to support voice over internet protocol (VoIP) service, which is not supported in current UMTS systems. VoIP applications provide continuous voice data traffic such that data rates vary over time due to intermittent voice activity. Variable data rate applications like VoIP provide specific challenges for physical resource allocation, as described below.

eNBs in LTE are responsible for physical radio resource assignment for both uplink (UL) communications from a UE to the eNB, and downlink (DL) communications from eNB to a UE. Radio resource allocation in LTE systems involves the assignment of frequency-time (FT) resources in an UL or DL for a particular data flow. Specifically, according to current LTE proposals, FT resources are allocated according to blocks of frequency subcarriers or subchannels in one or more timeslots, generally referred to as radio blocks. The amount of physical resources assigned to a data flow, for example a number of radio blocks, is typically chosen to support the required data rate of the application or possibly other quality of service (QoS) requirements such as priority.

It has been proposed that physical resource allocation for DL and UL communications over the E-UTRA air interface in LTE can be made valid for either a predetermined duration of time, known as non-persistent assignment, or an undetermined duration of time, known as persistent assignment. Since the assignment messages transmitted by the eNB may target both the intended recipient UE of the assignment as well as any UEs currently assigned to the resources specified by the assignment, the eNB may multicast the assignment message, such that the control channel structure allows for UEs to decode control channel messages targeted for other UEs.

For applications that require sporadic resources, such as hypertext transport protocol (HTTP) web browser traffic, the physical resources are best utilized if they are assigned on an as-need basis. In this case, the resources are explicitly assigned and signaled by the layer 1 (L1) control channel, where L1 includes the physical (PHY) layer.
For applications requiring periodic or continuous allocation of resources, such as for VoIP, periodic or continuous signaling of assigned physical resources may be avoided using persistent allocation. According to persistent allocation, radio resource assignments are valid as long as an explicit deallocation is not made. The objective of persistent scheduling is to reduce L1 and layer 2 (L2) control channel overhead, especially for VoIP traffic, where L2 includes the medium access control (MAC) layer. Persistent and non-persistent assignments by the L1 control channel may be supported using, for example, a persistent flag or a message ID to distinguish between the two types of assignment in an assignment message transmitted by the eNB.

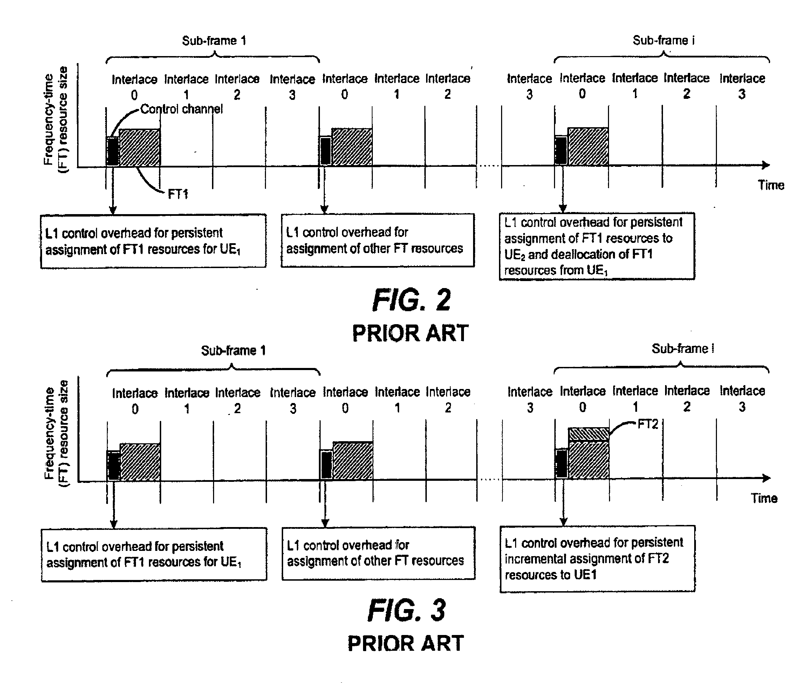

Figures 2 and 3 illustrate examples of persistent allocation of frequency-time resources in LTE, where each physical layer sub-frame comprises four time interlaces to support HARQ retransmissions of negatively acknowledged data.
Each interlace is used for the transmission of a particular higher layer data flow, such that the same interlace in a subsequent sub-frame is used for retransmission of packets that were unsuccessfully transmitted. A fixed set of frequency-time (FT) resources are assigned in each interlace for control traffic as a control channel, which may include the L1 common control channel (CCCH) and synchronization channel.

Figure 2 shows an example of persistent allocation and deallocation. In sub-frame 1, a first set of frequency-time resources (FT1), including one or more radio blocks, are allocated to UE₁, via the control channel. Assuming the transmission of data to UE₁ completes after i-1 sub-frames, the eNB sends in sub-frame i a control message to UE₁ and UE₂ in order to deallocate resources FT1 from UE₁ and allocate them to UE₂. The control channel can be used in the intermediate sub-frames between sub-frames 1 and i for the assignment of other FT resources. Figure 3 shows an example of persistent allocation and expansion, where eNB assigns additional physical resources FT2 to UE₁ in sub-frame i to support higher data rates for UE₁.

A characteristic of many real time services (RTS), such as voice services, is variable data rates. In the case of voice services, a conversation is characterized by periods of speech followed by periods of silence, thus requiring alternating constantly varying data rates. For example, a typical adaptive multi-rate (AMR) channel for voice service supports eight encoding rates from 4.75 Kbps to 12.2 Kbps and a typical adaptive multi-rate wide-band (AMR-WB) channel supports nine encoding rates from 6.6 Kbps to 23.85 Kbps.

Current techniques for persistent resource scheduling are not designed to accommodate variations in data rates. Under conventional persistent allocation, physical resources are allocated to support either a maximum data rate for a data flow or some sufficiently large fixed data rate supported by the physical channel. Accordingly, physical resources are wasted because the resource allocation is not able to adapt to changes in required data rates resulting from, for example, intermittent voice activity.

In order to support variable data rates, an eNB must be signaled the changing data rates for both UL and DL traffic. In LTE systems, an eNB can easily monitor DL data rate variations that originate at the eNB and make efficient DL resource assignment. However, current UMTS systems and proposals for LTE systems do not provide a manner for an eNB to monitor data rate variations for UL traffic originating at a UE so that the eNB may accordingly assign the appropriate amount of UL physical resources in a dynamic and efficient manner. Additionally, current proposals for LTE systems do not support high-level configuration operations for VoIP service.

The inventors have recognized that there is a need in LTE systems for support of dynamic resource allocation in combination with persistent resource allocation, along with efficient scheduling and control signaling, in order to support RTS applications with changing data rates such as VoIP. Therefore, the inventors have developed a method and apparatus for solving these problems in LTE systems.

WO-2006/019267-A**,** describes a real time data transmitting method in a WTRU, where the size of transmission data is variable. Data of a size corresponding to a data rate allocated by a base station, BS, is transmitted to the BS, and, if the data rate needs to be changed, a change of the current data rate is requested. Data of a size corresponding to the changed data rate is transmitted along with the rate change request.

QUALCOMM EUROPE: "R1-060173 Considerations for control signalling support of Real Time Services", 3GPP TSG-RAN WG1 LTE AD-HOC, 19 January 2006 (2006-01-19), Helsinki, Finland, January 23-25,2006**,** discusses control signalling to support realtime services, RTS. Persistent and non-persistent allocations may be used.

HOWON LEE, TAESOO KWON AND DONG-HO CHO: "Extended-rtPS Algorithm for VoIP Services in IEEE 802.16 systems", IEEE ICC 2006 PROCEEDINGS, 14 June 2006 (2006-06-14), Istanbul, Turkey, 11-15 June 2006 describes a Voice over IP scheduling algorithm where a user informs a base station of his voice status using a grant management subheader. The user requests bandwidth for sending voice packets using extended piggyback request bits of a grant management subheader.

### SUMMARY

A method and apparatus for radio resource allocation, scheduling and signaling for variable data rate and real time service (RTS) applications are provided, where the present invention is preferably used in long term evolution (LTE) and high speed packet access (HSPA) systems.

In a first preferred embodiment, high-level information including radio access bearer (RAB), logical channel or data flow ID and HARQ process ID are only transmitted during a configuration stage of an RTS data flow. Sequence numbers for the RTS data flow are assigned at the radio link control (RLC) layer so that reordering of packets at a receiver are handled at higher layers.

According to a second preferred embodiment, variable data rates for uplink (UL) RTS traffic.are reported to an evolved Node B (eNB) by reporting only the change in data rate relative to a current data rate for an RTS service using layer 1, layer 2 or layer 3 signaling.

In a third preferred embodiment, an eNB dynamically allocates radio blocks for RTS data flows in a wireless link in response to the uplink signaling of a change in data rate, currently assigned radio blocks are deallocated or reallocated to other services or UEs, and if the data rate is increased, additional radio blocks are assigned to the RTS data flow. The eNB signals the new physical resource allocation to the UE by only signaling the change in radio block assignment.

In a fourth preferred embodiment, both the eNB and the UE store a table mapping radio resource requirements for different RTS data rates and channel conditions, such that the UE uses the table for dynamic resource assignment when a change in data rate is signaled for an RTS data flow.

A more detailed understanding of the invention may be had from the following description of a preferred embodiment, given by way of example and to be understood in conjunction with the accompanying drawings.

### BRIEF DESCRIPTION OF THE DRAWINGS

Figure 1 is a block diagram of the system architecture of a conventional UMTS network.

Figure 2 is a diagram showing an example of persistent assignment allocation and deallocation in the time-frequency domain.

Figure 3 is a diagram showing an example of persistent assignment allocation and expansion in the time-frequency domain.

Figure 4 is a flow diagram of a method for high-level configuration of real time services (RTS), in accordance with a first embodiment of the present invention.

Figure 5 is a flow diagram of a method for signaling variable data rates for uplink traffic, in accordance with a second embodiment of the present invention.

Figure 6 is a flow diagram of a method for dynamic allocation and signalling of radio resources at an evolved Node B (eNB) for RTS with variable data rates, in accordance with a third embodiment of the present invention.

Figure 7 is a flow diagram of a method for dynamic allocation and signalling of radio resources at a user equipment (UE) for RTS with variable data rates, in accordance with a fourth embodiment of the present invention.

### DETAILED DESCRIPTION OF THE PREFERRED EMBODIMENTS

Hereafter, a wireless transmit/receive unit (WTRU) includes but is not limited to a user equipment (UE), mobile station, fixed or mobile subscriber unit, pager, or any other type of device capable of operating in a wireless environment. When referred to hereafter, a base station includes but is not limited to a Node-B, evolved Node B (eNB), site controller, access point or any other type of interfacing device in a wireless environment. A base station is a type of WTRU.

Although Generation Partnership Project (3GPP) long term evolution (LTE) is used by way of example in the following description, the present invention is applicable to wireless communication systems including, but not limited to, high speed packet access (HSPA) and HSPA evolution (HSPA+) systems. Additionally, real time services (RTS) such as voice over internet protocol (VoIP) are used by way of example to describe the invention. However, the present invention is intended to support any intermittently transmitting or variable data applications, and may also be used to adapt resource allocation for retransmissions. In the following, radio access bearer (RAB) or logical channel may be used interchangeably with data flow.

According to a first preferred embodiment, high-level information for a RTS data flow including a data flow identification (ID), or equivalently a radio access bearer (RAB) or logical channel ID, and a hybrid automatic repeat request (HARQ) process ID, are transmitted from an eNB to higher layers of a recipient UE during a configuration stage prior to the transmission of the data flow. A HARQ process prior to the transmission of the data flow. A HARQ process is preferably assigned for an entire data flow. Accordingly, the data flow ID and HARQ process ID are preferably only transmitted once at the beginning of the data flow and not on a per packet basis. For example, referring to Figure 2, a data flow ID and HARQ process ID for a user equipment UE₁ is sent in sub-frame 1 in connection with the assignment of frequency-time (FT) resources FT1 to UE₁. Similarly, a data flow ID and HARQ process ID for another user equipment UE₂ is sent in sub-frame i in connection with the assignment of frequency-time (FT) resources FT1 to UE₂ following the completion of the use of FT1 by UE₁.

Additionally, packet sequence numbers are preferably assigned at higher radio link control (RLC) layers, such that sequence numbers are not used at lower layers such as physical (PHY) and medium access control (MAC) layers. Accordingly, the reordering of packets that are received is handled at or above the RLC layer, for example, by a layer 3 (L3) protocol such as radio resource control (RRC).

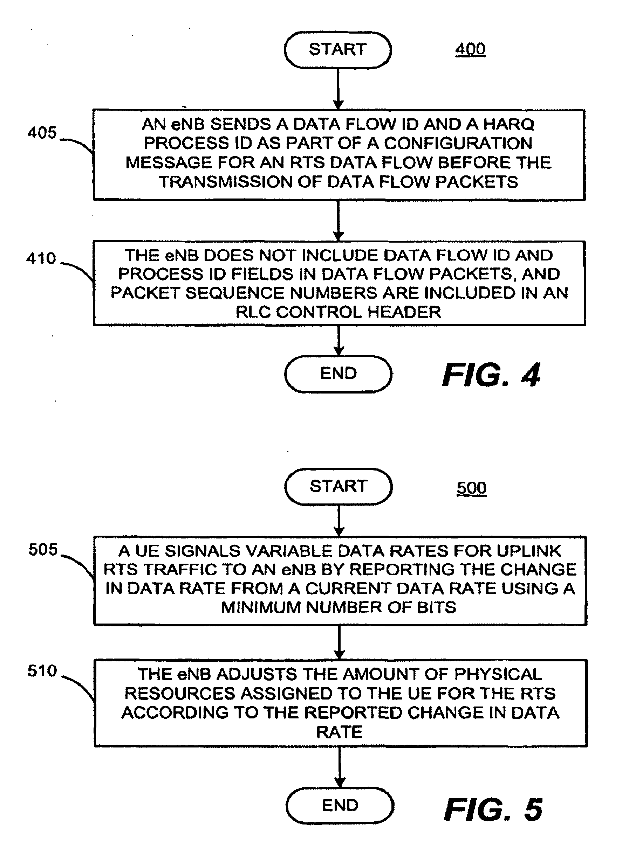

Figure 4 is a flow diagram of a method 400 for high-level configuration of RTS in accordance with the first embodiment of the present invention. In step 405, an eNB sends a data flow ID (or equivalently a RAB or logical channel ID) and a HARQ process ID as part of a configuration message for an RTS data flow before the transmission of data flow packets, for example in connection with FT1 assignment to UE₁ in subframe 1 of Figure 2. In step 410, the eNB does not include data flow ID and process ID fields in data flow packets for higher layers, but packet sequence numbers are included in an RLC control header, for example, for packets transmitted in subframes 2 through i-1 for the UE₁ communication of Figure 2 which ends. There is a resultant saving in higher layer signaling, since the higher layers received, for example, the data flow ID and HARQ process ID then available for use in processing the data packets for the UE₁ communication that are received in sub-frames 2 through i-1 without repetitive signaling of the ID information. Further saving in signaling is realized through the elimination of sequence number signaling in the lower layers.
In implementing method 400, a transmitter is configured to transmit data flow and HARQ process IDs in a configuration message and transmit packet sequence numbers in an RLC control header.

According to a second embodiment of the present invention, a UE preferably signals information to an eNB concerning variable data rates in uplink (UL) communications. This is preferably done by reporting a change in data rate relative to a current data rate. An RTS data flow is initially assigned a certain amount of physical resources in order to support a current data rate using, for example, persistent assignment. When the UE detects a new data rate, the UE preferably signals to the eNB the difference between the current data rate and the new data rate. By signaling only the difference in data rate, the number of overhead bits used is minimized.

By way of example, 4 reporting bits are required to report the actual data rate when up to 9 codec rates as used in a VoIP service. More reporting bits are used if more codec rates are available. When only the change in data rate is reported, the number of reporting bits is reduced from 4 to 3 because the greatest change in data rate from the lowest rate to the highest rate is only 8. Preferably, the minimum number of reporting bits is used to report the possible variations in data rate for a particular RTS service.

The change in data rate of an RTS data flow over the UL may be signaled using layer 1 (L1), layer 2 (L2) or layer 3 (L3) signaling, where L1 includes the physical (PHY) layer, layer 2 includes the medium access control (MAC) and radio link control (RLC) layers and layer 3 includes the radio resource control (RRC) layer. Alternatively, the change in data rate may be signaled at higher layers.

L1 signaling of changes in data rate of UL traffic is preferably done using L1 control signaling, such that variable data rate reporting bits may be multiplexed with other UL L1 signals including hybrid automatic repeat request (HARQ), acknowledgment (ACK), negative acknowledgment (NAK) and channel quality indicator (CQI). Alternatively, an UL thin channel may be used. The UL thin channel is preferably used by a UE that needs to report a rate change to the eNB in an expedited manner so that the eNB assigns new UL resources to the RTS sooner. In another alternative, a data rate change indication can be sent using a synchronous random access channel (RACH), where the RACH has the benefit of small access delays.

The signaling of changes in data rate of UL traffic at L2 is preferably done by including rate change reporting bits in a MAC header of a packet scheduled for transmission over the UL. Alternatively, a rate change indication can be piggybacked with any UL L2 packet if the timing of the piggybacked packet is within a reasonable delay. Alternatively, a rate change indication can be sent via MAC control packet data unit (PDU), where the MAC control PDU may exclusively contain the data rate change indication or may contain other information for other control purposes. In another alternative, a rate change indication may be included in a periodic RLC status report from the UE to the eNB. Using L3 signaling, a change in data rate may be signaled by including a rate change indication in RRC signaling.

When the eNB detects the data rate change reported by a UE, the eNB dynamically reallocates physical resources assigned to the RTS of that UE accordingly. For example, if the data rate decreased, then the eNB can reallocate some of the resources originally assigned to the UE during persistent assignment to other UEs. The eNB may assign additional resources to the UE in the case of an increase in data rate.

Preferably, the dynamic allocation by the eNB overrides the initial resource allocation by persistent assignment. The eNB may specify a time duration during which the dynamic allocation overrides the original allocation when signaling the dynamic resource allocation to the UE. If no duration is specified, then it may be assumed that the dynamic allocation is only used once. The dynamic allocation by eNB to override persistent resource allocation is not only applicable to variable data rate services, but may also be used to reallocate resources for retransmissions.

Figure 5 is a flow diagram of a method 500 for signaling variable data rates for UL RTS traffic, in accordance with the second embodiment of the present invention. A UE signals variable data rates for UL RTS traffic to an eNB by reporting the change in data rate relative to a current data rate using a minimum number of bits, in step 505. The reporting may be done using L1, L2 or L3 signaling, as described above. In step 510, the eNB adjusts the amount of physical resources assigned to the UE for the RTS according to the reported change in data rate. In contrast with the prior art of Figures 2 and 3, the FT resource allocation for UE₁ made in sub-frame 1 does not necessarily remain fixed until sub-frame i, but can be dynamically changed per step 510 in a sub-frame prior to subframe i. In implementing method 500, a transceiver component may be configured to transmit signals reflecting change in data rate, and a resource allocation component may be configured to allocate physical resources.

According to a third embodiment of the present invention, DL and UL radio resources assigned to an RTS data flow are dynamically allocated in order to efficiently use the physical resources assigned to variable data rates services. Typically, the maximum amount of radio resources required for an RTS are initially assigned by persistent allocation, in order to support the maximum data rate for the RTS. For illustrative purposes, it is assumed that a set of N radio blocks are initially allocated by persistent scheduling. The eNB preferably dynamically allocates only a subset of the N radio blocks to the RTS data low when lower data rates are required. Under higher data rates, the eNB allocates a larger set of radio blocks, and can allocate new radio blocks in addition to the original set of N radio blocks, if desired. If sub-band allocation is supported, where radio resources are allocated according to fractions of a radio block, then dynamic resource allocation is preferably adapted to the granularity of sub-bands.

Preferably, only the change in radio resource allocation resulting from dynamic resource allocation is signaled by the eNB to the target UE in order to reduce signaling overhead. In one embodiment, the radio resource blocks assigned to the RTS are indexed, such that the radio blocks may be arranged in increasing or decreasing order according to index number. Accordingly, the eNB only signals the number of radio blocks for dynamic allocation, such that the UE accordingly uses the reported number of radio blocks in order of index number starting with the radio block with either lowest or the highest index number. By way of example, radio blocks indexed 2, 3, 5 and 8 are assigned to a UE (i.e. N=4) for an RTS data flow during persistent scheduling. In response to a decrease in data rate, the eNB reports that only 3 radio blocks are dynamically allocated to the UE. Based on the report from the eNB and starting with the lowest index, the UE knows that the new resource allocation is radio blocks 2, 3 and 5. Alternatively, a positive or negative difference between the original allocation of N blocks and the number needed may be signaled. Where more blocks are required, default parameters can be provided or block identification can be signaled for the additional blocks.

A new radio resource allocation is preferably signaled by a eNB to a UE as a field in L1 or L2 control signaling for fast DL or UL dynamic resource allocation, or, in L3 RRC signaling in the case of slowly changing resource allocation. When L1 or L2 control signaling is used, a physical layer ACK or NAK is preferably transmitted back to the eNB to improve the reliability of the resource allocation signaling. Additionally, information including, but not limited to, the duration of new radio resource allocation, repetition period, sequence pattern, radio resource and the frequency hopping pattern may be provided as part of the radio resource allocation signaling, when desired.

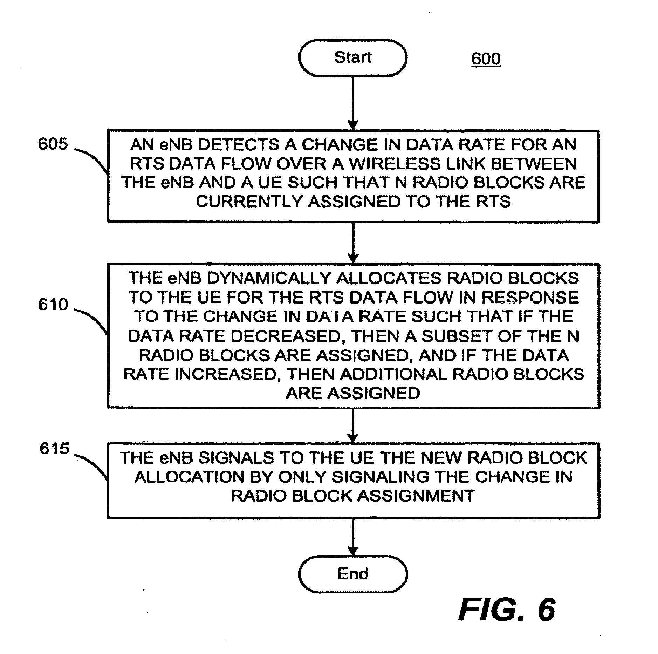

Figure 6 is a flow diagram of a method 600 for dynamic allocation and signaling of radio resources at an eNB for RTS with variable data rates, in accordance with the third embodiment of the present invention. In step 605, an eNB is notified of a change in data rate for an RTS data flow over a wireless link between the eNB and a UE such that N radio blocks are currently assigned to the RTS. In step 610, the eNB dynamically allocates radio blocks to the UE for the RTS data flow in response to the change in data rate such that if the data rate decreased, then a subset of the N radio blocks are assigned, and if the data rate increased, then additional radio blocks are assigned. In step 615, the eNB signals to the UE the new radio block allocation by only signaling the change in radio block assignment. In contrast with the prior art of Figures 2 and 3, the FT resource allocation for UE₁ made in sub-frame 1 does not necessarily remain fixed until sub-frame i, but can be dynamically changed per step 615 prior to sub-frame i. In implementing method 600, a data rate detection component may be configured to detect changes in data rate associated with a data flow, and a resource allocation component can be configured to allocate physical resources and is associated with a transmitter in order to signal resource allocations to a UE.

In accordance with a fourth embodiment of the present invention, a table relating data rates to radio resource characteristics is used for efficient radio resource allocation and signaling of UL resources. Both the eNB and the UE preferably store a pre-calculated table relating a number of radio resource blocks, or when applicable sub-bands, required for RTS data rates for a range of channel conditions according to, for example, modulation and coding scheme (MCS). When a new data rate is identified at the UE for a current RTS data flow over the UL, the UE preferably calculates the needed radio resources under determined UL channel conditions based on the table entry for that data rate. Accordingly, the UE does not have to communicate with the eNB to adapt its resource assignment, and overhead control signaling to the eNB is reduced.

In a preferred embodiment, the eNB signals a preallocated table to the UE where the table identifies specific radio resources, such as radio blocks or sub-bands, that are required for various RTS data rates for a range of channel conditions. For example, radio blocks may be referred to by index number, as described above. The UE dynamically allocates UL resources in response to a change in data rate of an RTS data flow by looking up the corresponding resources in the table, and signals the assigned resource set to the eNB. The UE may wait for an approval message from the eNB before using the newly assigned UL resources. The eNB preferably sends an approval of new radio resource assignment when additional resources are allocated to accommodate an increase in data rate. The approval message from the eNB is optional when radio resources are deallocated for decreases in data rate.

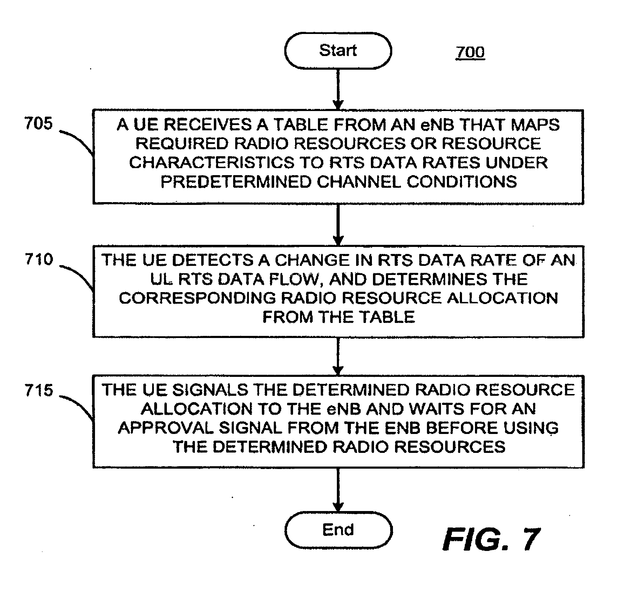

Figure 7 is a flow diagram of a method 700 for dynamic allocation and signaling of radio resources at a user equipment (UE) for RTS with variable data rates, in accordance with the fourth embodiment of the present invention. In step 705, a UE receives a table from an eNB that maps required radio resources or resource characteristics to RTS data rates under predetermined channel conditions. In step 710, the UE detects a change in data rate of an UL RTS data flow, and determines the corresponding radio resource allocation from the table. In step 715, the UE signals the determined radio resource allocation to the eNB and waits for an approval signal from the eNB before using the determined radio resources. In contrast with the prior art of Figures 2 and 3, the FT resource allocation for UE₁ made in sub-frame 1 does not necessarily remain fixed until sub-frame i, but can be dynamically changed in a subframe prior to sub-frame i. In implementing method 700, a transceiver is used to receive the table from the eNB and signal radio resource allocations to the eNB, and a data rate detection component is configured to detect changes in data rate.

The following examples are useful for understanding the invention
Example 1. A base station configured to conduct wireless communications in a wireless communication system.
Example 2. The base station of example 1 comprising a resource allocation component configured to allocate for a selected period a set of physical resources of a wireless link to a variable data rate data flow with a wireless transmit/receive unit (WTRU) according to a current data rate associated with the data flow.
Example 3. The base station of example 2 further comprising a data rate detection component configured to detect a new data rate associated with the data flow.
Example 4. The base station as in any of examples 2-3 wherein said resource allocation component is configured to dynamically allocate a new set of physical resources to the data flow according to the new data rate during said selected period.
Example 5. The The base station as in any of examples 3-4 wherein the data rate detection component is configured in a receiver to detect a new data rate based on signaling received from the WTRU during the selected period.
Example 6. The base station of example 5 wherein the resource allocation component is associated with a transmitter that is configured to signal resource allocations to WTRUs.
Example 7. The base station of example 6 wherein the transmitter is configured to signal resources allocations using one of layer 1, layer 2 or layer 3 signaling.
Example 8. The base station as in any of examples 6-7 wherein the transmitter is further configured to signal at least one of a duration, a repetition period, a sequence pattern, a radio resource pattern and a frequency hopping pattern associated with resource allocations to WTRUs.
Example 9. The base station as in any of examples 3-8 wherein the data rate detection component is configured to detect a new data rate based on receiving a signal indicative of the amount of change in the data rate from the WTRU.
Example 10. The base station as in any of examples 3-9 wherein the data rate detection component is configured to detect a new data rate based on receiving a signal indicative of an increase or decrease in required resource allocation from the WTRU.
Example 11. The base station of example 10 wherein the resource allocation component is configured to signal a new set of allocated physical resources to the WTRU after receiving a signal indicative of an increase in required resource allocation from the WTRU.
Example 12. The base station as in any of examples 10-11 wherein the resource allocation component is configured not to signal a new set of allocated physical resources to the WTRU after receiving a signal indicative of a decrease in required resource allocation from the WTRU.
Example 13. The base station as in any of examples 2-12 wherein the resource allocation component is configured to signal a table that maps resources when signaling a set of allocated physical resources.
Example 14. The base station as in any of examples 10-13 wherein the resource allocation component is configured to signal approval of a new set of allocated physical resources to the WTRU after receiving a signal indicative of an increase in required resource allocation from the WTRU whereby the WTRU then uses the new set of allocated physical resources determined by the WTRU.
Example 15. The base station as in any of examples 3-14 wherein the data rate detection component is configured to detect a new data rate based on monitoring the data flow during the selected period and the resource allocation component is associated with a transmitter that is configured to signal resource allocations to WTRUs.
Example 16. The base station as in any of examples 2-15 wherein the resource allocation component is configured to signal resource allocations to WTRUs in terms of a number of blocks.
Example 17. The base station of example 16 where the resource allocation component is configured to signal a revised set of allocated physical resources by signaling information related to the number of blocks in the revised set of allocated physical resources.
Example 18. The base station as in any of examples 2-17 wherein the physical resources include frequency-time resources.
Example 19. The base station as in any of examples 2-18 wherein the physical resources include radio blocks comprising blocks of frequency subcarriers and timeslots.
Example 20. The base station as in any of the preceding examples wherein the data flow is part of a real time service.
Example 21. The base station of example 20 wherein the real time service is a Voice over Internet Protocol (VoIP) service.
Example 22. The base station as in any of the preceding examples configured as an evolved Node B (eNB) in a 3GPP long term evolution (LTE) wireless communication system.
Example 23. The base station of example 22 wherein the WTRU is configured as a User Equipment (UE).
Example 24. A base station configured with a hierarchy of layers including a lowest physical layer, a medium access control (MAC) layer and higher layers to conduct wireless communications in a wireless communication system.
Example 25. The base station of example 24 comprising a resource allocation component configured to allocate for a selected period a set of physical resources of a wireless link to a data flow with a wireless transmit/receive unit (WTRU) according to a current data rate associated with the data flow.
Example 26. The base station of example 25 further comprising a transmitter configured to signal resource allocations to WTRUs in a selected time frame format.
Example 27. The base station of example 26 wherein the transmitter is configured to signal resource allocations to WTRUs in a selected time frame format such that a resource allocation for a data flow is transmitted in connection with a data flow identification (ID) in a higher layer in advance of transmitting data packets associated with the data flow.
Example 28. The base station of example 27 wherein the transmitter is further configured to transmit data packets associated with the data flow with packet sequence numbers in higher layers without the data flow ID.
Example 29. The base station of example 26 wherein the transmitter is configured to signal resource allocations to WTRUs in a selected time frame format such that a resource allocation for a data flow is transmitted in connection with a data flow identification (ID) and a hybrid automatic repeat request (HARQ) process ID in a higher layer in advance of transmitting data packets associated with the data flow.
Example 30. The base station of example 29 wherein the transmitter is further configured to transmit data packets associated with the data flow with packet sequence numbers in higher layers without the data flow ID or the HARQ process ID.
Example 31. The base station as in any of embodiments 26-30 wherein the transmitter is configured to transmit data packets associated with data flows such that packet sequence numbers are excluded from physical layer and MAC layer signaling.
Example 32. The base station as in any of examples 25-31 configured as an evolved Node B (eNB) in a 3GPP long term evolution (LTE) wireless communication system wherein the WTRU is configured as a User Equipment (UE).
Example 33. A wireless transmit/receive unit (WTRU) configured to conduct wireless communications in a wireless communications system.
Example 34. The WTRU of example 33 comprising a transceiver component configured to utilize selectively allocated sets of physical resources of a wireless link for a variable data rate data flow with a base station.
Example 35. The WTRU of example 24 wherein said transceiver component configured to accept a new dynamically allocated set of physical resources reflective of a rate change in the data flow while an allocated set of physical resources is being used.
Example 36. The WTRU as in any of examples 34-35 further comprising a data rate detection component configured to detect a new data rate associated with the data flow while an allocated set of physical resources is being used.
Example 37. The WTRU of example 36 wherein said transceiver component is configured to transmit a signal indicative of a detected rate change in the data flow to the base station.
Example 38. The WTRU of example 37 wherein said transceiver component is configured to transmit a signal reflecting an amount of a detected rate change to the base station as the signal indicative of a detected rate change in the data flow.
Example 39. The WTRU of example 38 wherein said transceiver component is further configured to use a new dynamically allocated set of physical resources signaled from the base station that is generated in response to the WTRU's signal reflecting an amount of a detected rate change.
Example 40. The WTRU as in any of examples 36-39 wherein the data rate detection component is configured to determine a new allocated set of physical resources in response to detecting a new data rate associated with the data flow.
Example 41. The WTRU of example 40 wherein said transceiver component is configured to transmit a signal indicative of the determined new allocated set of physical resources to the base station as the signal indicative of a detected rate change in the data flow.
Example 42. The WTRU as in any of examples 35-41 wherein said transceiver component is configured to transmit a signal to the base station indicating an increase or a decrease of physical resources between the determined new allocated set of physical resources and the allocated set of physical resources being used as the signal indicative of a detected rate change in the data flow.
Example 43. The WTRU of example 42 wherein said transceiver component is configured to use the determined new allocated set of physical resources upon determining a decrease in physical resources.
Example 44. The WTRU as in any of examples 42-43 wherein said transceiver component is further configured to use the determined new allocated set of physical resources after receiving a signal indicating acceptance by the base station when an increase in physical resources is determined.
Example 45. The WTRU as in any of examples 34-44 wherein said transceiver component is configured to receive from the base station signaling reflecting the selectively allocated sets of physical resources for the wireless link for the variable data rate data flow in terms of a number of resource blocks.
Example 46. The WTRU and is configured to receive a signal reflective of a revised number resource blocks upon which to base the new dynamically allocated set of physical resources reflective of a rate change in the data flow.
Example 47. The WTRU as in any of examples 33-46 configured as a UE in a long term evolution (LTE) wireless communication system.
Example 48. The WTRU as in any of examples 24-46 wherein the base station is configured as an evolved Node B (eNB).
Example 49. A wireless transmit/receive unit (WTRU) configured with a heirarchy of layers including a lowest physical layer, a medium access control (MAC) layer and higher layers to conduct wireless communications in a wireless communication system.
Example 50. The WTRU of example 49 comprising a transceiver component configured to utilize selectively allocated sets of physical resources of for a wireless link for a variable data rate data flow with a base station.
Example 51. The WTRU of example 50 wherein said transceiver component configured to receive signals indicative of a resource allocation from a base station in a selected time frame format such that a resource allocation for a data flow is received in connection with a data flow identification (ID) in a higher layer in advance of receiving data packets associated with the data flow.
Example 52. The WTRU of example 51 wherein said transceiver component is further configured to receive data packets associated with the data flow with packet sequence numbers in higher layers without the data flow ID.
Example 53. The WTRU as in any of example 50-52 wherein said transceiver component is configured to receive signals indicative of a resource allocation in a selected time frame format such that a resource allocation for a data flow is received in connection with a data flow identification (ID) and a hybrid automatic repeat request (HARQ) process ID in a higher layer in advance of receiving data packets associated with the data flow.
Example 54. The WTRU of example 52 wherein said transceiver component is configured to then receive data packets associated with the data flow with packet sequence numbers in higher layers without the data flow ID or the HARQ process ID.
Example 55. The WTRU of example 54 wherein said transceiver component is configured to receive data packets associated with data flows such that packet sequence numbers are excluded from physical layer and MAC layer signaling.
Example 56. The WTRU as in any of examples 50 - 55 configured as a UE in a long term evolution (LTE) wireless communication system wherein the base station is configured as an evolved Node B (eNB).
Example 57. A method for dynamic resource allocation and signaling in a wireless communication system.
Example 58. The method of example 57 comprising allocating a first set of physical resources of a wireless link to a variable data rate data flow according to a current data rate associated with the data flow.
Example 59. The method of example 58 further comprising detecting a new data rate associated with the data flow.
Example 60. The method of example 59 further comprising dynamically allocating a new set of physical resources to the data flow according to the new data rate.
Example 61. The method of example 60 further comprising signaling the new set of physical resources.
Example 62. The method as in any of examples 58-61 wherein the wireless link is between a WTRU and at least one other WTRU.
Example 63. The method of example 62 wherein the signaling the new set of physical resources is to the at least one other WTRU.
Example 64. The method as in any of examples 61-63 wherein the signaling the new set of physical resources is in layer 1 or layer 2 signaling.
Example 65. The method as in any of examples 61-63 wherein the signaling the new set of physical resources is in layer 3 radio resource control signaling.
Example 66. The method as in any of examples 60-65 further comprising signaling at least one of a duration, a repetition period, a sequence pattern, a radio resource pattern and a frequency hopping pattern associated with the new set of physical resources.
Example 67. The method as in any of examples 61-66 further comprising receiving one of an acknowledgement (ACK) or a negative acknowledgement (NAK) in response to the signaling of the new set of physical resources.
Example 68. The method as in any of examples 61-67 wherein the signaling the new set of physical resources is by signaling a change from the first set of physical resources to the new set of physical resources.
Example 69. The method of example 68 wherein the physical resources include radio blocks and the dynamically allocating the new set of physical resources is by adding or removing radio blocks from the first set of physical resources.
Example 70. The method of example 69 wherein the removing blocks occurs when the new data rate is less than the current data rate.
Example 71. The method as in any of examples 69-70 wherein the adding blocks occurs when the new data rate is greater than the current data rate.
Example 72. The method as in any of examples 69-71 wherein each radio block has an associated index number and wherein the signaling the new set of physical resources is based on the index numbers.
Example 73. The method of example 72 wherein the dynamically allocating the new set of physical resources is relative to a lowest index number associated with radio blocks in the first set of physical resources.
Example 74. The method as in any of examples 69-73 wherein the signaling the new set of physical resources includes a number of radio blocks in the new set of physical resources.
Example 75. The method as in any of examples 58-74 wherein the allocating the first set of physical resources is according to persistent assignment.
Example 76. The method as in any of examples 59-75 further comprising receiving the new data rate from an at least one other WTRU.
Example 77. The method as in any of examples 67-76 wherein the new data rate is received as a relative change in data rate between the new data rate and the current data rate.
Example 78. The method as in any of examples 58-77 wherein the physical resources include frequency-time resources.
Example 79. The method of example 78 wherein the physical resources include radio blocks comprising blocks of frequency subcarriers and timeslots.
Example 80. The method as in any of examples 58-79 wherein the data flow is part of a real time service.
Example 81. The method of example 80 wherein the real time service is a Voice over Internet Protocol (VoIP) service.
Example 82. The method as in any of examples 58-81 further comprising signaling a data flow ID and a hybrid automatic repeat request (HARQ) ID during a configuration stage for the data flow.
Example 83. The method of example 82 wherein the configuration stage is a control channel in a first subframe.
Example 84. The method of example 83 further comprising assigning sequence numbers to packets of a data flow at a radio link control (RLC) layer.
Example 85. A method for dynamic resource allocation and signaling in a wireless communication system.
Example 86. The method of example 85 comprising storing a predetermined table mapping required physical resources or physical resource characteristics to a range of real time service (RTS) data rates under predetermined channel conditions.
Example 87. The method of example 86 further comprising detecting a new data rate associated with a data flow.
Example 88. The method of example 87 further comprising dynamically allocating a new set of physical resources to the data flow according to the table and the new data rate.
Example 89. The method of example 88 further comprising signaling the new set of physical resources.
Example 90. The method of example 89 wherein the signaling the new set of physical resources is to a second WTRU.
Example 91. The method of example 90, further comprising receiving an approval signal from the second WTRU.
Example 92. The method of example 91 further comprising waiting to use the new set of physical resources until the approval signal is received.
Example 93. The method as in any of example 80-92 configured to operate in a User Equipment (UE) in a long term evolution (LTE) system wherein the second WTRU is configured as an evolved Node B (eNB).
Example 94. The method as in any of examples 86-93 wherein the required physical resources include radio blocks and the required physical resource characteristics include a number of radio blocks.
Example 95. The method as in any of examples 86-94 wherein the predetermined channel conditions include a modulation and coding scheme (MCS).

Although the features and elements of the present invention are described in the preferred examples in particular combinations, each feature or element can be used alone without the other features and elements of the preferred examples or in various combinations with or without other features and elements of the present invention. The methods or flow charts provided in the present invention may be implemented in a computer program, software, or firmware tangibly embodied in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any integrated circuit, and/or a state machine.

A processor in association with software may be used to implement a radio frequency transceiver for in use in a wireless transmit receive unit (WTRU), user equipment, terminal, base station, radio network controller, or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth^{®} module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) module.

Further examples include:
Example A. A base station configured to conduct wireless communications in a wireless communication system comprising:
   a resource allocation component configured to allocate for a selected period a set of physical resources of a wireless link to a variable data rate data flow with a wireless transmit/receive unit (WTRU) according to a current data rate associated with the data flow;
   a data rate detection component configured to detect a new data rate associated with the data flow; and
   said resource allocation component configured to dynamically allocate a new set of physical resources to the data flow according to the new data rate during said selected period.
Example B. The base station of example A wherein the data rate detection component is configured in a receiver to detect a new data rate based on signaling received from the WTRU during the selected period and the resource allocation component is associated with a transmitter that is configured to signal resource allocations to WTRUs.
Example C. The base station of example B wherein the transmitter is configured to signal resources allocations using one of layer 1, layer 2 or layer 3 signaling.
Example D. The base station of example B wherein the transmitter is further configured to signal at least one of a duration, a repetition period, a sequence pattern, a radio resource pattern and a frequency hopping pattern associated with resource allocations to WTRUs.
Example E. The base station of example B wherein the data rate detection component is configured to detect a new data rate based on receiving a signal indicative of the amount of change in the data rate from the WTRU.
Example F The base station of example B wherein the data rate detection component is configured to detect a new data rate based on receiving a signal indicative of an increase or decrease in required resource allocation from the WTRU.
Example G. The base station of example F wherein the resource allocation component is configured to signal a new set of allocated physical resources to the WTRU after receiving a signal indicative of an increase in required resource allocation from the WTRU and is configured not to signal a new set of allocated physical resources to the WTRU after receiving a signal indicative of a decrease in required resource allocation from the WTRU.
Example H. The base station of example F wherein the resource allocation component is configured to signal a table that maps resources when signaling a set of allocated physical resources.
Example I. The base station of example F wherein the resource allocation component is configured to signal approval of a new set of allocated physical resources to the WTRU after receiving a signal indicative of an increase in required resource allocation from the WTRU whereby the WTRU then uses the new set of allocated physical resources determined by the WTRU.
Example J. The base station of example A wherein the data rate detection component is configured to detect a new data rate based on monitoring the data flow during the selected period and the resource allocation component is associated with a transmitter that is configured to signal resource allocations to WTRUs.
Example K. The base station of example A wherein the resource allocation component is configured to signal resource allocations to WTRUs in terms of a number of blocks and is configured to signal a revised set of allocated physical resources by signaling information related to the number of blocks in the revised set of allocated physical resources.
Example L. The base station of example A wherein the physical resources include frequency-time resources.
Example M. The base station of example L wherein the physical resources include radio blocks comprising blocks of frequency subcarriers and timeslots.
Example N. The base station of example A wherein the data flow is part of a real time service.
Example O. The base station of example N wherein the real time service is a Voice over Internet Protocol (VoIP) service.
Example P. The base station of example A configured as an evolved Node B (eNB) in a 3GPP long term evolution (LTE) wireless communication system wherein the WTRU is configured as a User Equipment (UE).
Example Q. A base station configured with a hierarchy of layers including a lowest physical layer, a medium access control (MAC) layer and higher layers to conduct wireless communications in a wireless communication system, the base station comprising:
   a resource allocation component configured to allocate for a selected period a set of physical resources of a wireless link to a data flow with a wireless transmit/receive unit (WTRU) according to a current data rate associated with the data flow; and
   a transmitter configured to signal resource allocations to WTRUs in a selected time frame format such that a resource allocation for a data flow is transmitted in connection with a data flow identification (ID) in a higher layer in advance of transmitting data packets associated with the data flow and to then transmit data packets associated with the data flow with packet sequence numbers in higher layers without the data flow ID.
Example R. The base station of example Q wherein the transmitter is configured to signal resource allocations to WTRUs in a selected time frame format such that a resource allocation for a data flow is transmitted in connection with a data flow identification (ID) and a hybrid automatic repeat request (HARQ) process ID in a higher layer in advance of transmitting data packets associated with the data flow and to then transmit data packets associated with the data flow with packet sequence numbers in higher layers without the data flow ID or the HARQ process ID.
Example S. The base station of example R wherein the transmitter is configured to transmit data packets associated with data flows such that packet sequence numbers are excluded from physical layer and MAC layer signaling.
Example T. The base station of example A configured as an evolved Node B (eNB) in a 3GPP long term evolution (LTE) wireless communication system wherein the WTRU is configured as a User Equipment (UE).
Example U. A wireless transmit/receive unit (WTRU) configured to conduct wireless communications in a wireless communication system comprising:
   a transceiver component configured to utilize selectively allocated sets of physical resources of a wireless link for a variable data rate data flow with a base station; and
   said transceiver component configured to accept a new dynamically allocated set of physical resources reflective of a rate change in the data flow while an allocated set of physical resources is being used.
Example V. The WTRU of example U including a data rate detection component configured to detect a new data rate associated with the data flow while an allocated set of physical resources is being used and wherein said transceiver component is configured to transmit a signal indicative of a detected rate change in the data flow to the base station.
Example W . The WTRU of example V wherein said transceiver component is configured to transmit a signal reflecting an amount of a detected rate change to the base station as the signal indicative of a detected rate change in the data flow and is configured to use a new dynamically allocated set of physical resources signaled from the base station that is generated in response to the WTRU's signal reflecting an amount of a detected rate change.
Example X. The WTRU of example V wherein the data rate detection component is configured to determine a new allocated set of physical resources in response to detecting a new data rate associated with the data flow and said transceiver component is configured to transmit a signal indicative of the determined new allocated set of physical resources to the base station as the signal indicative of a detected rate change in the data flow.
Example Y. The WTRU of example X wherein said transceiver component is configured to transmit a signal to the base station indicating an increase or a decrease of physical resources between the determined new allocated set of physical resources and the allocated set of physical resources being used as the signal indicative of a detected rate change in the data flow.
Example Z. The WTRU of example X wherein said transceiver component is configured to use the determined new allocated set of physical resources upon determining a decrease in physical resources and to use the determined new allocated set of physical resources after receiving a signal indicating acceptance by the base station when an increase in physical resources is determined.
Example Z2. The WTRU of example U wherein said transceiver component is configured to receive from the base station signaling reflecting the selectively allocated sets of physical resources for the wireless link for the variable data rate data flow in terms of a number of resource blocks and is configured to receive a signal reflective of a revised number resource blocks upon which to base the new dynamically allocated set of physical resources reflective of a rate change in the data flow.
Example Z3. The WTRU of example Z2 configured as a UE in a long term evolution (LTE) wireless communication system wherein the base station is configured as an evolved Node B (eNB).
Example Z4. A wireless transmit/receive unit (WTRU) configured with a heirarchy of layers including a lowest physical layer, a medium access control (MAC) layer and higher layers to conduct wireless communications in a wireless communication system, the WTRU comprising:
   a transceiver component configured to utilize selectively allocated sets of physical resources of for a wireless link for a variable data rate data flow with a base station; and
   said transceiver component configured to receive signals indicative of a resource allocation from a base station in a selected time frame format such that a resource allocation for a data flow is received in connection with a data flow identification (ID) in a higher layer in advance of receiving data packets associated with the data flow and to then receive data packets associated with the data flow with packet sequence numbers in higher layers without the data flow ID.
Example Z5. The WTRU of example Z4 wherein said transceiver component is configured to receive signals indicative of a resource allocation in a selected time frame format such that a resource allocation for a data flow is received in connection with a data flow identification (ID) and a hybrid automatic repeat request (HARQ) process ID in a higher layer in advance of receiving data packets associated with the data flow and to then receive data packets associated with the data flow with packet sequence numbers in higher layers without the data flow ID or the HARQ process ID.
Example Z6. The WTRU of example Z5 wherein said transceiver component is configured to receive data packets associated with data flows such that packet sequence numbers are excluded from physical layer and MAC layer signaling.
Example Z7. The WTRU of example Z4 configured as a UE in a long term evolution (LTE) wireless communication system wherein the base station is configured as an evolved Node B (eNB).
Example Z8. A method for dynamic resource allocation and signaling in a wireless communication system comprising:
   allocating a first set of physical resources of a wireless link to a variable data rate data flow according to a current data rate associated with the data flow;
   detecting a new data rate associated with the data flow;
   dynamically allocating a new set of physical resources to the data flow according to the new data rate; and
   signaling the new set of physical resources.
Example Z9. The method of example Z8 wherein the wireless link is between a WTRU and at least one other WTRU.
Example Z10. The method of example Z9 wherein the signaling the new set of physical resources is to the at least one other WTRU.
Example Z11. The method of example Z8 wherein the signaling the new set of physical resources is in layer 1 or layer 2 signaling.
Example Z12. The method of example Z8 wherein the signaling the new set of physical resources is in layer 3 radio resource control signaling.
Example Z13. The method of example Z8 further comprising signaling at least one of a duration, a repetition period, a sequence pattern, a radio resource pattern and a frequency hopping pattern associated with the new set of physical resources.
Example Z14. The method of example Z8 further comprising receiving one of an acknowledgement (ACK) or a negative acknowledgement (NAK) in response to the signaling of the new set of physical resources.
Example Z15. The method of example Z8 wherein the signaling the new set of physical resources is by signaling a change from the first set of physical resources to the new set of physical resources.
Example Z16. The method of example Z8 wherein the physical resources include radio blocks and the dynamically allocating the new set of physical resources is by adding or removing radio blocks from the first set of physical resources.
Example Z17. The method of example Z16 wherein:
   the removing blocks occurs when the new data rate is less than the current data rate, and
   adding blocks occurs when the new data rate is greater than the current data rate.
Example Z18. The method of example Z16 wherein each radio block has an associated index number and wherein the signaling the new set of physical resources is based on the index numbers.
Example Z19. The method of example Z18 wherein:
   the dynamically allocating the new set of physical resources is relative to a lowest index number associated with radio blocks in the first set of physical resources; and
   the signaling the new set of physical resources includes a number of radio blocks in the new set of physical resources.
Example Z20. The method of example Z8 wherein the allocating the first set of physical resources is according to persistent assignment.
Example Z21. The method of example Z8 further comprising receiving the new data rate from an at least one other WTRU.
Example Z22. The method of example Z21 wherein the new data rate is received as a relative change in data rate between the new data rate and the current data rate.
Example Z23. The method of example Z8 wherein the physical resources include frequency-time resources.
Example Z24. The method of example Z23 wherein the physical resources include radio blocks comprising blocks of frequency subcarriers and timeslots.
Example Z25. The method of example Z8 wherein the data flow is part of a real time service.
Example Z26. The method of example Z25 wherein the real time service is a Voice over Internet Protocol (VoIP) service.
Example Z27. The method of example Z8 further comprising signaling a data flow ID and a hybrid automatic repeat request (HARQ) ID during a configuration stage for the data flow.
Example Z28. The method of example Z27 wherein the configuration stage is a control channel in a first subframe.
Example Z29. The method of example Z8 further comprising assigning sequence numbers to packets of a data flow at a radio link control (RLC) layer.
Example Z30. A method for dynamic resource allocation and signaling in a wireless communication system comprising:
   storing a predetermined table mapping required physical resources or physical resource characteristics to a range of real time service (RTS) data rates under predetermined channel conditions;
   detecting a new data rate associated with a data flow; and
   dynamically allocating a new set of physical resources to the data flow according to the table and the new data rate; and
   signaling the new set of physical resources.
Example Z31. The method of example Z30 wherein the signaling the new set of physical resources is to a second WTRU, further comprising:
   receiving an approval signal from the second WTRU; and
   waiting to use the new set of physical resources until the approval signal is received.
Example Z32. The method of example Z31 configured to operate in a User Equipment (UE) in a long term evolution (LTE) system wherein the second WTRU is configured as an evolved Node B (eNB).
Example Z33. The method of example Z30 wherein the required physical resources include radio blocks and the required physical resource characteristics include a number of radio blocks.
Example Z34. The method of example Z30 wherein the predetermined channel conditions include a modulation and coding scheme (MCS).

## Claims

1. A wireless transmit/receive unit, WTRU, comprising:
means for receiving a first allocation of resources for uplink data, wherein the first allocation of resources is a first type of resource allocation, wherein the first allocation of resources indicates at least a first number of resource blocks assigned to the WTRU; and
means for transmitting uplink data according to the first allocation of resources; **characterised by**:
means for receiving control information indicating a second allocation of resources for uplink data, wherein the second allocation of resources is a second type of resource allocation, wherein the second allocation of resources indicates at least a second number of resource blocks assigned to the WTRU;
means for transmitting uplink data according to the second allocation of resources for a predetermined time duration; and
means for transmitting uplink data according to the first allocation of resources after the predetermined time duration.

2. The WTRU of claim 1 wherein the second allocation of resources overrides the first allocation of resources during the predetermined time duration.

3. The WTRU of claim 1 wherein the control information is received as L1/L2 control information.

4. The WTRU of claim 3 wherein the L1/L2 control information is received in an orthogonal frequency division multiple access, OFDMA, format.

5. The WTRU of claim 1 wherein the predetermined time duration is a single subframe.

6. The WTRU of claim 1 wherein the first allocation of resources is associated with a first data rate and the second allocation of resources is associated with a second data rate different from the first data rate.

7. The WTRU of claim 1 wherein the WTRU operates in a real time system, RTS.

8. The WTRU of claim 1 wherein the WTRU operates in a voice over internet protocol, IP, VOIP, environment.

9. The WTRU of claim 1 wherein the first number of resource blocks indicates a first number of subchannels assigned to the WTRU and the second number of resource blocks indicates a second number of subchannels assigned to the WTRU.

10. The WTRU of claim 1 wherein the first allocation of resources is utilized for transmitting uplink data until the WTRU receives a deallocation of the first allocation of resources.

11. The WTRU of claim 1 further comprising:
means for retransmitting uplink data according to the second allocation of resources for the predetermined time duration.

12. The WTRU of claim 1 wherein:
the first allocation of resources is different from the second allocation of resources and wherein the first allocation of resources and the second allocation of resources are distinguished by different identifications, IDs.

13. A method for dynamic resource allocation comprising:
receiving a first allocation of resources for uplink data, wherein the first allocation of resources indicates at least a first number of resource blocks assigned to the WTRU; and
transmitting uplink data according to the first allocation of resources; **characterised by**:
receiving control information indicating a second allocation of resources for uplink data, wherein the second allocation of resources indicates at least a second number of resource blocks assigned to the WTRU;
transmitting uplink data according to the second allocation of resources for a predetermined time duration; and
transmitting uplink data according to the first allocation of resources after the predetermined time duration.

14. The method of claim 13 wherein the second allocation of resources overrides the first allocation of resources during the predetermined time duration.

15. The method of claim 13 wherein the control information is received as L1/L2 control information.

16. The method of claim 15 wherein the L1/L2 control information is received in an orthogonal frequency division multiple access, OFDMA, format.

17. The method of claim 13 wherein the predetermined time duration is a single subframe.

18. The method of claim 13 wherein the first allocation of resources is associated with a first data rate and the second allocation of resources is associated with a second data rate different from the first data rate.

19. The method of claim 13 wherein the dynamic resource allocation is in a real time system, RTS.

20. The method of claim 13 wherein the dynamic resource allocation is in a voice over internet protocol, IP, VOIP, environment.

21. The method of claim 13 wherein the first number of resource blocks indicates a first number of subchannels assigned to the WTRU and the second number of resource blocks indicates a second number of subchannels assigned to the WTRU.

22. The method of claim 13 wherein the first allocation of resources is utilized for transmitting uplink data until the WTRU receives a deallocation of the first allocation of resources.

23. The method of claim 13 further comprising:
retransmitting uplink data according to the second allocation of resources.

24. The method of claim 13 wherein:
the first allocation of resources is different from the second allocation of resources and wherein the first allocation of resources and the second allocation of resources are distinguished by different identifications, IDs.

25. A base station comprising:
means for transmitting to a wireless transmit/receive unit, WTRU, a first allocation of resources for uplink data, wherein the first allocation of resources indicates at least a first number of resource blocks assigned to the WTRU; and
means for receiving from the WTRU uplink data according to the first allocation of resources; **characterised by**:
means for transmitting to the WTRU control information indicating a second allocation of resources for uplink data, wherein the second allocation of resources indicates at least a second number of resource blocks assigned to the WTRU; and
means for receiving from the WTRU uplink data according to the second allocation of resources for a predetermined time duration and receive uplink data according to the first allocation of resources after the predetermined time duration.

26. A wireless transmit/receive unit, WTRU, comprising:
means for receiving a first allocation of resources for downlink data, wherein the first allocation of resources indicates at least a first number of resource blocks assigned to the WTRU; and
means for receiving downlink data according to the first allocation of resources; **characterised by**:
means for receiving control information indicating a second allocation of resources for downlink data, wherein the second allocation of resources indicates at least a second number of resource blocks assigned to the WTRU; and
means for receiving downlink data according to the second allocation of resources for a predetermined time duration and receive downlink data according to the first allocation of resources after the predetermined time duration.

27. The WTRU of claim 26 wherein the second allocation of resources overrides the first allocation of resources during the predetermined time duration.

28. The WTRU of claim 26 wherein the control information is received as L1/L2 control information.

29. The WTRU of claim 28 wherein the L1/L2 control information is received in an orthogonal frequency division multiple access, OFDMA, format.

30. The WTRU of claim 26 wherein the predetermined time duration is a single subframe.

31. The WTRU of claim 26 wherein the first allocation of resources is associated with a first data rate and the second allocation of resources is associated with a second data rate different from the first data rate.

32. The WTRU of claim 26 wherein the WTRU operates in a real time system, RTS.

33. The WTRU of claim 26 wherein the WTRU operates in a voice over internet protocol, IP, VOIP, environment.

34. The WTRU of claim 26 wherein the first number of resource blocks indicates a first number of subchannels assigned to the WTRU and the second number of resource blocks indicates a second number of subchannels assigned to the WTRU.

35. The WTRU of claim 26 wherein the first allocation of resources is utilized for receiving downlink data until the WTRU receives a deallocation of the first allocation of resources.

36. The WTRU of claim 26 further comprising:
means for receiving retransmissions of downlink data according to the second allocation of resources for the predetermined time duration.

37. The WTRU of claim 26 wherein:
the first allocation of resources is different from the second allocation of resources and wherein the first allocation of resources and the second allocation of resources are distinguished by different identifications, IDs.

38. A method for dynamic resource allocation comprising:
receiving a first allocation of resources for downlink data, wherein the first allocation of resources indicates at least a first number of resource blocks assigned to the WTRU; and
receiving downlink data according to the first allocation of resources; **characterised by**:
receiving control information indicating a second allocation of resources for downlink data, wherein the second allocation of resources indicates at least a second number of resource blocks assigned to the WTRU; and
receiving downlink data according to the second allocation of resources for a predetermined time duration; and
receiving downlink data according to the first allocation of resources after the predetermined time duration.

39. The method of claim 38 wherein the second allocation of resources overrides the first allocation of resources during the predetermined time duration.

40. The method of claim 38 wherein the control information is received as L1/L2 control information.

41. The method of claim 40 wherein the L1/L2 control information is received in an orthogonal frequency division multiple access, OFDMA, format.

42. The method of claim 38 wherein the predetermined time duration is a single subframe.

43. The method of claim 38 wherein the first allocation of resources is associated with a first data rate and the second allocation of resources is associated with a second data rate different from the first data rate.

44. The method of claim 38 wherein the dynamic resource allocation is in a real time system, RTS.

45. The method of claim 38 wherein the dynamic resource allocation is in a voice over internet protocol, IP, VOIP, environment.

46. The method of claim 38 wherein the first number of resource blocks indicates a first number of subchannels assigned to the WTRU and the second number of resource blocks indicates a second number of subchannels assigned to the WTRU.

47. The method of claim 38 wherein the first allocation of resources is utilized for receiving downlink data until the WTRU receives a deallocation of the first allocation of resources.

48. The method of claim 38 further comprising:
receiving retransmissions of downlink data according to the second allocation of resources.

49. The method of claim 38 wherein:
the first allocation of resources is different from the second allocation of resources and wherein the first allocation of resources and the second allocation of resources are distinguished by different identifications, IDs.

50. A base station comprising:
means for transmitting to a wireless transmit/receive unit, WTRU, a first allocation of resources for downlink data, wherein the first allocation of resources indicates at least a first number of resource blocks assigned to the WTRU; and
means for transmitting to the WTRU downlink data according to the first allocation of resources; **characterised by**:
means for transmitting to the WTRU control information indicating a second allocation of resources for downlink data, wherein the second allocation of resources indicates at least a second number of resource blocks assigned to the WTRU; and
means for transmitting to the WTRU downlink data according to the second allocation of resources for a predetermined time duration and transmit downlink data according to the first allocation after the predetermined time duration.

## Patentansprüche

1. Drahtlose Sende-/Empfangseinheit, WTRU, aufweisend:
Mittel für Empfangen einer ersten Zuweisung von Ressourcen für Uplink-Daten, wobei die erste Zuweisung von Ressourcen ein erster Typ von Ressourcenzuweisung ist, wobei die erste Zuweisung von Ressourcen wenigstens eine erste Anzahl von der WTRU zugeordneten Ressourcenblöcken angibt; und
Mittel für Senden von Uplink-Daten in Übereinstimmung mit der ersten Zuweisung von Ressourcen; **gekennzeichnet durch**:
Mittel für Empfangen von Steuerinformation, die indikativ für eine zweite Zuweisung von Ressourcen für Uplink-Daten ist, wobei die zweite Zuweisung von Ressourcen ein zweiter Typ von Ressourcenzuweisung ist, wobei die zweite Zuweisung von Ressourcen wenigstens eine zweite Anzahl von der WTRU zugeordneten Ressourcenblöcken angibt;
Mittel für Senden von Uplink-Daten in Übereinstimmung mit der zweiten Zuweisung von Ressourcen während einer im Voraus bestimmten Zeitdauer; und
Mittel für Senden von Uplink-Daten in Übereinstimmung mit der ersten Zuweisung von Ressourcen nach der im Voraus bestimmten Zeitdauer.

2. WTRU nach Anspruch 1, wobei die zweite Zuweisung von Ressourcen während der im Voraus bestimmten Zeitdauer Vorrang vor der ersten Zuweisung von Ressourcen hat.

3. WTRU nach Anspruch 1, wobei die Steuerinformation als L1/L2-Steuerinformation empfangen wird.

4. WTRU nach Anspruch 3, wobei die L1/L2-Steuerinformation in einem orthogonalen Frequenzmultiplex-Zugangs-Format, OFDMA, empfangen wird.

5. WTRU nach Anspruch 1, wobei die im Voraus bestimmte Zeitdauer ein einzelner Subframe ist.

6. WTRU nach Anspruch 1, wobei die erste Zuweisung von Ressourcen einer ersten Datenrate zugeordnet ist und die zweite Zuweisung von Ressourcen einer zweiten Datenrate zugeordnet ist, die sich von der ersten Datenrate unterscheidet.

7. WTRU nach Anspruch 1, wobei die WTRU in einem Echtzeitsystem (Real time system - RTS) arbeitet.

8. WTRU nach Anspruch 1, wobei die WTRU in einer Voice-over-Internet-Protocol-Umgebung, IP, VOIP, arbeitet.

9. WTRU nach Anspruch 1, wobei die erste Anzahl von Ressourcenblöcken eine erste Anzahl von Subkanälen angibt, die der WTRU zugeordnet sind, und die zweite Anzahl von Ressourcenblöcken eine zweite Anzahl von Subkanälen angibt, die der WTRU zugeordnet sind.

10. WTRU nach Anspruch 1, wobei die erste Zuweisung von Ressourcen für ein Senden von Uplink-Daten benutzt wird, bis die WTRU eine Freigabe der ersten Zuweisung von Ressourcen empfängt.

11. WTRU nach Anspruch 1, ferner aufweisend:
Mittel für erneutes Senden von Uplink-Daten in Übereinstimmung mit der zweiten Zuweisung von Ressourcen während der im Voraus bestimmten Zeitdauer.

12. WTRU nach Anspruch 1, wobei:
die erste Zuweisung von Ressourcen sich von der zweiten Zuweisung von Ressourcen unterscheidet, und wobei die erste Zuweisung von Ressourcen und die zweite Zuweisung von Ressourcen sich durch unterschiedliche Identifikationen, ID, voneinander unterscheiden.

13. Verfahren zur dynamischen Ressourcenzuweisung, aufweisend:
Empfangen einer ersten Zuweisung von Ressourcen für Uplink-Daten , wobei die erste Zuweisung von Ressourcen wenigstens eine erste Anzahl von der WTRU zugeordneten Ressourcenblöcken angibt; und
Senden von Uplink-Daten in Übereinstimmung mit der ersten Zuweisung von Ressourcen; **gekennzeichnet durch**:
Empfangen von Steuerinformation, die indikativ für eine zweite Zuweisung von Ressourcen für Uplink-Daten ist, wobei die zweite Zuweisung von Ressourcen wenigstens eine zweite Anzahl von der WTRU zugeordneten Ressourcenblöcken angibt;
Senden von Uplink-Daten in Übereinstimmung mit der zweiten Zuweisung von Ressourcen während einer im Voraus bestimmten Zeitdauer; und
Senden von Uplink-Daten in Übereinstimmung mit der ersten Zuweisung von Ressourcen nach der im Voraus bestimmten Zeitdauer.

14. Verfahren nach Anspruch 13, wobei die zweite Zuweisung von Ressourcen während der im Voraus bestimmten Zeitdauer Vorrang vor der ersten Zuweisung von Ressourcen hat.

15. Verfahren nach Anspruch 13, wobei die Steuerinformation als L1/L2-Steuerinformation empfangen wird.

16. Verfahren nach Anspruch 15, wobei die L1/L2-Steuerinformation in einem orthogonalen Frequenzmultiplex-Zugangs-Format, OFDMA, empfangen wird.

17. Verfahren nach Anspruch 13, wobei die im Voraus bestimmte Zeitdauer ein einzelner Subframe ist.

18. Verfahren nach Anspruch 13, wobei die erste Zuweisung von Ressourcen einer ersten Datenrate zugeordnet ist und die zweite Zuweisung von Ressourcen einer zweiten Datenrate zugeordnet ist, die sich von der ersten Datenrate unterscheidet.

19. Verfahren nach Anspruch 13, wobei die dynamische Ressourcenzuweisung in einem Echtzeitsystem (Real time system - RTS) arbeitet.

20. Verfahren nach Anspruch 13, wobei die dynamische Ressourcenzuweisung in einer Voice-over-Internet-Protocol-Umgebung, IP, VOIP, arbeitet.

21. Verfahren nach Anspruch 13, wobei die erste Anzahl von Ressourcenblöcken eine erste Anzahl von Subkanälen angibt, die der WTRU zugeordnet sind, und die zweite Anzahl von Ressourcenblöcken eine zweite Anzahl von Subkanälen angibt, die der WTRU zugeordnet sind.

22. Verfahren nach Anspruch 13, wobei die erste Zuweisung von Ressourcen für ein Senden von Uplink-Daten benutzt wird, bis die WTRU eine Freigabe der ersten Zuweisung von Ressourcen empfängt.

23. Verfahren nach Anspruch 13, ferner aufweisend:
erneutes Senden von Uplink-Daten in Übereinstimmung mit der zweiten Zuweisung von.

24. Verfahren nach Anspruch 13, wobei:
die erste Zuweisung von Ressourcen sich von der zweiten Zuweisung von Ressourcen unterscheidet, und wobei die erste Zuweisung von Ressourcen und die zweite Zuweisung von Ressourcen sich durch unterschiedliche Identifikationen, ID, voneinander unterscheiden.

25. Basisstation, aufweisend:
Mittel für Senden einer ersten Zuweisung von Ressourcen für Uplink-Daten an eine drahtlose Sende-/Empfangseinheit, WTRU, wobei die erste Zuweisung von Ressourcen wenigstens eine erste Anzahl von der WTRU zugeordneten Ressourcenblöcken angibt; und
Mittel für Empfangen von Uplink-Daten in Übereinstimmung mit der ersten Zuweisung von Ressourcen von der WTRU; **gekennzeichnet durch**:
Mittel für Senden von Steuerinformation, die indikativ für eine zweite Zuweisung von Ressourcen für Uplink-Daten an die WTRU ist, wobei die zweite Zuweisung von Ressourcen wenigstens eine zweite Anzahl von der WTRU zugeordneten Ressourcenblöcken angibt; und
Mittel für Empfangen von Uplink-Daten in Übereinstimmung mit der zweiten Zuweisung von Ressourcen von der WTRU während einer im Voraus bestimmten Zeitdauer und Empfangen von Uplink-Daten in Übereinstimmung mit der ersten Zuweisung von Ressourcen nach der im Voraus bestimmten Zeitdauer.

26. Drahtlose Sende-/Empfangseinheit, WTRU, aufweisend:
Mittel für Empfangen einer ersten Zuweisung von Ressourcen für Downlink-Daten, wobei die erste Zuweisung von Ressourcen wenigstens eine erste Anzahl von der WTRU zugeordneten Ressourcenblöcken angibt; und
Mittel für Empfangen von Downlink-Daten in Übereinstimmung mit der ersten Zuweisung von Ressourcen; **gekennzeichnet durch**:
Mittel für Empfangen von Steuerinformation, die indikativ für eine zweite Zuweisung von Ressourcen für Downlink-Daten ist, wobei die zweite Zuweisung von Ressourcen wenigstens eine zweite Anzahl von der WTRU zugeordneten Ressourcenblöcken angibt; und
Mittel für Empfangen von Downlink-Daten in Übereinstimmung mit der zweiten Zuweisung von Ressourcen während einer im Voraus bestimmten Zeitdauer und Empfangen von Downlink-Daten in Übereinstimmung mit der ersten Zuweisung von Ressourcen nach der im Voraus bestimmten Zeitdauer.

27. WTRU nach Anspruch 26, wobei die zweite Zuweisung von Ressourcen während der im Voraus bestimmten Zeitdauer Vorrang vor der ersten Zuweisung von Ressourcen hat.

28. WTRU nach Anspruch 26, wobei die Steuerinformation als L1/L2-Steuerinformation empfangen wird.

29. WTRU nach Anspruch 28, wobei die L1/L2-Steuerinformation in einem orthogonalen Frequenzmultiplex-Zugangs-Format, OFDMA, empfangen wird.

30. WTRU nach Anspruch 26, wobei die im Voraus bestimmte Zeitdauer ein einzelner Subframe ist.

31. WTRU nach Anspruch 26, wobei die erste Zuweisung von Ressourcen einer ersten Datenrate zugeordnet ist und die zweite Zuweisung von Ressourcen einer zweiten Datenrate zugeordnet ist, die sich von der ersten Datenrate unterscheidet.

32. WTRU nach Anspruch 26, wobei die WTRU in einem Echtzeitsystem (Real time system - RTS) arbeitet.

33. WTRU nach Anspruch 26, wobei die WTRU in einer Voice-over-Internet-Protocol-Umgebung, IP, VOIP, arbeitet.

34. WTRU nach Anspruch 26, wobei die erste Anzahl von Ressourcenblöcken eine erste Anzahl von Subkanälen angibt, die der WTRU zugeordnet sind, und die zweite Anzahl von Ressourcenblöcken eine zweite Anzahl von Subkanälen angibt, die der WTRU zugeordnet sind.

35. WTRU nach Anspruch 26, wobei die erste Zuweisung von Ressourcen für ein Senden von Downlink-Daten benutzt wird, bis die WTRU eine Freigabe der ersten Zuweisung von Ressourcen empfängt.

36. WTRU nach Anspruch 26, ferner aufweisend:
Mittel für Empfangen erneuter Sendungen von Downlink-Daten in Übereinstimmung mit der zweiten Zuweisung von Ressourcen während der im Voraus bestimmten Zeitdauer.

37. WTRU nach Anspruch 26, wobei:
die erste Zuweisung von Ressourcen sich von der zweiten Zuweisung von Ressourcen unterscheidet, und wobei die erste Zuweisung von Ressourcen und die zweite Zuweisung von Ressourcen sich durch unterschiedliche Identifikationen, ID, voneinander unterscheiden.

38. Verfahren zur dynamischen Ressourcenzuweisung, aufweisend:
Empfangen einer ersten Zuweisung von Ressourcen für Downlink-Daten , wobei die erste Zuweisung von Ressourcen wenigstens eine erste Anzahl von der WTRU zugeordneten Ressourcenblöcken angibt; und
Empfangen von Downlink-Daten in Übereinstimmung mit der ersten Zuweisung von Ressourcen; **gekennzeichnet durch**:
Empfangen von Steuerinformation, die indikativ für eine zweite Zuweisung von Ressourcen für Downlink-Daten ist, wobei die zweite Zuweisung von Ressourcen wenigstens eine zweite Anzahl von der WTRU zugeordneten Ressourcenblöcken angibt;
Empfangen von Downlink-Daten in Übereinstimmung mit der zweiten Zuweisung von Ressourcen während einer im Voraus bestimmten Zeitdauer; und
Empfangen von Downlink-Daten in Übereinstimmung mit der ersten Zuweisung von Ressourcen nach der im Voraus bestimmten Zeitdauer.

39. Verfahren nach Anspruch 38, wobei die zweite Zuweisung von Ressourcen während der im Voraus bestimmten Zeitdauer Vorrang vor der ersten Zuweisung von Ressourcen hat.

40. Verfahren nach Anspruch 38, wobei die Steuerinformation als L1/L2-Steuerinformation empfangen wird.

41. Verfahren nach Anspruch 40, wobei die L1/L2-Steuerinformation in einem orthogonalen Frequenzmultiplex-Zugangs-Format, OFDMA, empfangen wird.

42. Verfahren nach Anspruch 38, wobei die im Voraus bestimmte Zeitdauer ein einzelner Subframe ist.

43. Verfahren nach Anspruch 38, wobei die erste Zuweisung von Ressourcen einer ersten Datenrate zugeordnet ist und die zweite Zuweisung von Ressourcen einer zweiten Datenrate zugeordnet ist, die sich von der ersten Datenrate unterscheidet.

44. Verfahren nach Anspruch 38, wobei die dynamische Ressourcenzuweisung in einem Echtzeitsystem (Real time system - RTS) arbeitet.

45. Verfahren nach Anspruch 38, wobei die dynamische Ressourcenzuweisung in einer Voice-over-Internet-Protocol-Umgebung, IP, VOIP, arbeitet.

46. Verfahren nach Anspruch 38, wobei die erste Anzahl von Ressourcenblöcken eine erste Anzahl von Subkanälen angibt, die der WTRU zugeordnet sind, und die zweite Anzahl von Ressourcenblöcken eine zweite Anzahl von Subkanälen angibt, die der WTRU zugeordnet sind.

47. Verfahren nach Anspruch 38, wobei die erste Zuweisung von Ressourcen für ein Senden von Downlink-Daten benutzt wird, bis die WTRU eine Freigabe der ersten Zuweisung von Ressourcen empfängt.

48. Verfahren nach Anspruch 38, ferner aufweisend:
Empfangen erneuter Sendungen von Downlink-Daten in Übereinstimmung mit der zweiten Zuweisung von.

49. Verfahren nach Anspruch 38, wobei:
die erste Zuweisung von Ressourcen sich von der zweiten Zuweisung von Ressourcen unterscheidet, und wobei die erste Zuweisung von Ressourcen und die zweite Zuweisung von Ressourcen sich durch unterschiedliche Identifikationen, ID, voneinander unterscheiden.

50. Basisstation, aufweisend:
Mittel für Senden einer ersten Zuweisung von Ressourcen für Downlink-Daten an eine drahtlose Sende-/Empfangseinheit, WTRU, wobei die erste Zuweisung von Ressourcen wenigstens eine erste Anzahl von der WTRU zugeordneten Ressourcenblöcken angibt; und
Mittel für Empfangen von Downlink-Daten in Übereinstimmung mit der ersten Zuweisung von Ressourcen von der WTRU; **gekennzeichnet durch**:
Mittel für Senden von Steuerinformation, die indikativ für eine zweite Zuweisung von Ressourcen für Downlink-Daten an die WTRU ist, wobei die zweite Zuweisung von Ressourcen wenigstens eine zweite Anzahl von der WTRU zugeordneten Ressourcenblöcken angibt; und
Mittel für Senden von Downlink-Daten in Übereinstimmung mit der zweiten Zuweisung von Ressourcen von der WTRU während einer im Voraus bestimmten Zeitdauer und Senden von Downlink-Daten in Übereinstimmung mit der ersten Zuweisung von Ressourcen nach der im Voraus bestimmten Zeitdauer.

## Revendications

1. Unité émettrice-réceptrice sans fil, WTRU, comprenant :
des moyens pour effectuer la réception d'une première affectation de ressources pour des données de liaison montante, dans laquelle la première affectation de ressources est un premier type d'affectation de ressources, dans laquelle la première affectation de ressources indique au moins un premier nombre de blocs de ressources affectés à la WTRU ; et
des moyens pour effectuer la transmission de données de liaison montante en fonction de la première affectation de ressources ;
**caractérisée par** :
des moyens pour effectuer la réception d'informations de commande indiquant une deuxième affectation de ressources pour des données de liaison montante, dans laquelle la deuxième affectation de ressources est un deuxième type d'affectation de ressources, dans laquelle la deuxième affectation de ressources indique au moins un deuxième nombre de blocs de ressources affectés à la WTRU ;
des moyens pour effectuer la transmission de données de liaison montante en fonction de la deuxième affectation de ressources pendant une durée prédéterminée ; et
des moyens pour effectuer la transmission de données de liaison montante en fonction de la première affectation de ressources après la durée prédéterminée.

2. WTRU selon la revendication 1, dans laquelle la deuxième affectation de ressources prévaut sur la première affectation de ressources au cours de la durée prédéterminée.

3. WTRU selon la revendication 1, dans laquelle les informations de commande sont reçues en tant qu'informations de commande L1/L2.

4. WTRU selon la revendication 3, dans laquelle les informations de commande L1/L2 sont reçues dans un format d'accès multiples par répartition de fréquence orthogonale, OFDMA.

5. WTRU selon la revendication 1, dans laquelle la durée prédéterminée est une sous-trame unique.

6. WTRU selon la revendication 1, dans laquelle la première affectation de ressources est associée à un premier débit de données et la deuxième affectation de ressources est associée à un deuxième débit de données différent du premier débit de données.

7. WTRU selon la revendication 1, dans laquelle la WTRU fonctionne dans un système en temps réel, RTS.

8. WTRU selon la revendication 1, dans laquelle la WTRU fonctionne dans un environnement de voix sur protocole Internet, VOIP.

9. WTRU selon la revendication 1, dans laquelle le premier nombre de blocs de ressources indique un premier nombre de sous-canaux affectés à la WTRU et le deuxième nombre de blocs de ressources indique un deuxième nombre de sous-canaux affectés à la WTRU.

10. WTRU selon la revendication 1, dans laquelle la première affectation de ressources est utilisée pour transmettre des données de liaison montante jusqu'à ce que la WTRU reçoive une désaffectation de la première affectation de ressources.

11. WTRU selon la revendication 1, comprenant en outre :
des moyens pour effectuer la retransmission de données de liaison montante en fonction de la deuxième affectation de ressources pendant la durée prédéterminée.

12. WTRU selon la revendication 1, dans laquelle :
la première affectation de ressources est différente de la deuxième affectation de ressources et dans laquelle la première affectation de ressources et la deuxième affectation de ressources sont distinguées par différentes identifications, ID.

13. Procédé d'affectation dynamique de ressources comprenant :
la réception d'une première affectation de ressources pour des données de liaison montante, dans lequel la première affectation de ressources indique au moins un premier nombre de blocs de ressources affectés à la WTRU ; et
la transmission de données de liaison montante en fonction de la première affectation de ressources ; **caractérisé par** :
la réception d'informations de commande indiquant une deuxième affectation de ressources pour des données de liaison montante, dans lequel la deuxième affectation de ressources indique au moins un deuxième nombre de blocs de ressources affectés à la WTRU ;
la transmission de données de liaison montante en fonction de la deuxième affectation de ressources pendant une durée prédéterminée ; et
la transmission de données de liaison montante en fonction de la première affectation de ressources après la durée prédéterminée.

14. Procédé selon la revendication 13, dans lequel la deuxième affectation de ressources prévaut sur la première affectation de ressources au cours de la durée prédéterminée.

15. Procédé selon la revendication 13, dans lequel les informations de commande sont reçues en tant qu'informations de commande L1/L2.

16. Procédé selon la revendication 15, dans lequel les informations de commande L1/L2 sont reçues dans un format d'accès multiples par répartition de fréquence orthogonale, OFDMA.

17. Procédé selon la revendication 13, dans lequel la durée prédéterminée est une sous-trame unique.

18. Procédé selon la revendication 13, dans lequel la première affectation de ressources est associée à un premier débit de données et la deuxième affectation de ressources est associée à un deuxième débit de données différent du premier débit de données.

19. Procédé selon la revendication 13, dans lequel l'affectation dynamique de ressources s'effectue dans un système en temps réel, RTS.

20. Procédé selon la revendication 13, dans lequel l'affectation dynamique de ressources s'effectue dans un environnement de voix sur protocole Internet, VOIP.

21. Procédé selon la revendication 13, dans lequel le premier nombre de blocs de ressources indique un premier nombre de sous-canaux affectés à la WTRU et le deuxième nombre de blocs de ressources indique un deuxième nombre de sous-canaux affectés à la WTRU.

22. Procédé selon la revendication 13, dans lequel la première affectation de ressources est utilisée pour transmettre des données de liaison montante jusqu'à ce que la WTRU reçoive une désaffectation de la première affectation de ressources.

23. Procédé selon la revendication 13, comprenant en outre :
la retransmission de données de liaison montante en fonction de la deuxième affectation de ressources.

24. Procédé selon la revendication 13, dans lequel :
la première affectation de ressources est différente de la deuxième affectation de ressources et dans lequel la première affectation de ressources et la deuxième affectation de ressources sont distinguées par différentes identifications, ID.

25. Station de base comprenant :
des moyens pour effectuer la transmission à une unité émettrice-réceptrice sans fil, WTRU, d'une première affectation de ressources pour des données de liaison montante, dans laquelle la première affectation de ressources indique au moins un premier nombre de blocs de ressources affectés à la WTRU ; et
des moyens pour effectuer la réception en provenance de la WTRU de données de liaison montante en fonction de la première affectation de ressources ; **caractérisée par** :
des moyens pour effectuer la transmission à la WTRU d'informations de commande indiquant une deuxième affectation de ressources pour des données de liaison montante, dans laquelle la deuxième affectation de ressources indique au moins un deuxième nombre de blocs de ressources affectés à la WTRU ; et
des moyens pour effectuer la réception en provenance de la WTRU de données de liaison montante en fonction de la deuxième affectation de ressources pendant une durée prédéterminée et la réception de données de liaison montante en fonction de la première affectation de ressources après la durée prédéterminée.

26. Unité émettrice-réceptrice sans fil, WTRU, comprenant :
des moyens pour effectuer la réception d'une première affectation de ressources pour des données de liaison descendante, dans laquelle la première affectation de ressources indique au moins un premier nombre de blocs de ressources affectés à la WTRU ; et
des moyens pour effectuer la réception de données de liaison descendante en fonction de la première affectation de ressources ;
**caractérisée par** :
des moyens pour effectuer la réception d'informations de commande indiquant une deuxième affectation de ressources pour des données de liaison descendante, dans laquelle la deuxième affectation de ressources indique au moins un deuxième nombre de blocs de ressources affectés à la WTRU ; et
des moyens pour effectuer la réception de données de liaison descendante en fonction de la deuxième affectation de ressources pendant une durée prédéterminée et la réception de données de liaison descendante en fonction de la première affectation de ressources après la durée prédéterminée.

27. WTRU selon la revendication 26, dans laquelle la deuxième affectation de ressources prévaut sur la première affectation de ressources au cours de la durée prédéterminée.

28. WTRU selon la revendication 26, dans laquelle les informations de commande sont reçues en tant qu'informations de commande L1/L2.

29. WTRU selon la revendication 28, dans laquelle les informations de commande L1/L2 sont reçues dans un format d'accès multiples par répartition de fréquence orthogonale, OFDMA.

30. WTRU selon la revendication 26, dans laquelle la durée prédéterminée est une sous-trame unique.

31. WTRU selon la revendication 26, dans laquelle la première affectation de ressources est associée à un premier débit de données et la deuxième affectation de ressources est associée à un deuxième débit de données différent du premier débit de données.

32. WTRU selon la revendication 26, dans laquelle la WTRU fonctionne dans un système en temps réel, RTS.

33. WTRU selon la revendication 26, dans laquelle la WTRU fonctionne dans un environnement de voix sur protocole Internet, VOIP.

34. WTRU selon la revendication 26, dans laquelle le premier nombre de blocs de ressources indique un premier nombre de sous-canaux affectés à la WTRU et le deuxième nombre de blocs de ressources indique un deuxième nombre de sous-canaux affectés à la WTRU.

35. WTRU selon la revendication 26, dans laquelle la première affectation de ressources est utilisée pour recevoir des données de liaison descendante jusqu'à ce que la WTRU reçoive une désaffectation de la première affectation de ressources.

36. WTRU selon la revendication 26, comprenant en outre :
des moyens pour effectuer la réception de retransmissions de données de liaison descendante en fonction de la deuxième affectation de ressources pendant la durée prédéterminée.

37. WTRU selon la revendication 26, dans laquelle :
la première affectation de ressources est différente de la deuxième affectation de ressources et dans laquelle la première affectation de ressources et la deuxième affectation de ressources sont distinguées par différentes identifications, ID.

38. Procédé d'affectation dynamique de ressources comprenant :
la réception d'une première affectation de ressources pour des données de liaison descendante, dans lequel la première affectation de ressources indique au moins un premier nombre de blocs de ressources affectés à la WTRU ; et
la réception de données de liaison descendante en fonction de la première affectation de ressources ; **caractérisé par** :
la réception d'informations de commande indiquant une deuxième affectation de ressources pour des données de liaison descendante, dans lequel la deuxième affectation de ressources indique au moins un deuxième nombre de blocs de ressources affectés à la WTRU ; et
la réception de données de liaison descendante en fonction de la deuxième affectation de ressources pendant une durée prédéterminée ; et
la réception de données de liaison descendante en fonction de la première affectation de ressources après la durée prédéterminée.

39. Procédé selon la revendication 38, dans lequel la deuxième affectation de ressources prévaut sur la première affectation de ressources au cours de la durée prédéterminée.

40. Procédé selon la revendication 38, dans lequel les informations de commande sont reçues en tant qu'informations de commande L1/L2.

41. Procédé selon la revendication 40, dans lequel les informations de commande L1/L2 sont reçues dans un format d'accès multiples par répartition de fréquence orthogonale, OFDMA.

42. Procédé selon la revendication 38, dans lequel la durée prédéterminée est une sous-trame unique.

43. Procédé selon la revendication 38, dans lequel la première affectation de ressources est associée à un premier débit de données et la deuxième affectation de ressources est associée à un deuxième débit de données différent du premier débit de données.

44. Procédé selon la revendication 38, dans lequel l'affectation dynamique de ressources s'effectue dans un système en temps réel, RTS.

45. Procédé selon la revendication 38, dans lequel l'affectation dynamique de ressources s'effectue dans un environnement de voix sur protocole Internet, VOIP.

46. Procédé selon la revendication 38, dans lequel le premier nombre de blocs de ressources indique un premier nombre de sous-canaux affectés à la WTRU et le deuxième nombre de blocs de ressources indique un deuxième nombre de sous-canaux affectés à la WTRU.

47. Procédé selon la revendication 38, dans lequel la première affectation de ressources est utilisée pour recevoir des données de liaison descendante jusqu'à ce que la WTRU reçoive une désaffectation de la première affectation de ressources.

48. Procédé selon la revendication 38, comprenant en outre :
la réception de retransmissions de données de liaison descendante en fonction de la deuxième affectation de ressources.

49. Procédé selon la revendication 38, dans lequel :
la première affectation de ressources est différente de la deuxième affectation de ressources et dans lequel la première affectation de ressources et la deuxième affectation de ressources sont distinguées par différentes identifications, ID.

50. Station de base comprenant :
des moyens pour effectuer la transmission à une unité émettrice-réceptrice sans fil, WTRU, d'une première affectation de ressources pour des données de liaison descendante, dans laquelle la première affectation de ressources indique au moins un premier nombre de blocs de ressources affectés à la WTRU ; et
des moyens pour effectuer la transmission à la WTRU de données de liaison descendante en fonction de la première affectation de ressources ; **caractérisée par** :
des moyens pour effectuer la transmission à la WTRU d'informations de commande indiquant une deuxième affectation de ressources pour des données de liaison descendante, dans laquelle la deuxième affectation de ressources indique au moins un deuxième nombre de blocs de ressources affectés à la WTRU ; et
des moyens pour effectuer la transmission à la WTRU de données de liaison descendante en fonction de la deuxième affectation de ressources pendant une durée prédéterminée et la transmission de données de liaison descendante en fonction de la première affectation de ressources après la durée prédéterminée.
